# EUROPEAN PATENT APPLICATION

(11) **EP 4 759 651 A1**
(43) Date of publication of application: **17.06.2026**
(21) Application number: 24218675.7
(22) Date of filing: 10.12.2024
(51) Int. Cl.: B60T 13/66, B60T 13/68

(54) **TWO-CHANNEL ELECTRONIC BRAKE SYSTEM, COMMERCIAL VEHICLE, AND METHOD FOR REDUNDANT SUPPLY OF BRAKE PRESSURE**

(71) Applicant: KB Intellectual Property GmbH & Co. KG, 82049 Pullach (DE)
(72) Inventor: JUNDT, Oliver, 74394 Hessigheim (DE)

(57) **Abstract**

A brake system comprises a FBM (100) and a EPM, (200). The FBM comprises a first port (110) and a second port (120), a driver interface (130) as first input, and a control port (140) as a second input. The FBM is configured to generate a first control pressure (101) and a second control pressure (102). The EPM comprises a first channel port (210), a second channel port (220), and a pneumatic input port (230). The first channel port is configured to provide a first channel output (201). The second channel port is configured to provide a second channel output (202) to the pneumatic control port of the FBM. The pneumatic input port is configured to receive second control pressure (102) from the FBM and is fluidly connectable to the first channel port (210) and fluidly disconnected from the second channel port (220).

## Description

The present invention relates to a two-channel electronic brake system, to a commercial vehicle, and a method for redundant supply of brake pressure in a 2-circuit brake system and, in particular, to commercial vehicle brake system with only a single electro-pneumatic component with two channels and to commercial vehicle brake systems with more axles including the two-channel electronic brake system.

Electronic brake systems, EBS, of commercial vehicles are able to control electronically a brake pressure at axles or wheels utilizing pressure control modules, PCM, wherein two separated brake circuits can be implemented, one circuit controls the front axle and one the rear axle. Conventional brake systems implement a so-called 2C2 electronic PCM, wherein "2C2" stands for a two-circuit and two-channel electropneumatic module which is typically arrange near the rear axle. This fulfills the regulatory requirements, but long brake lines from the 2C2 PCM to the front axle has a negative effect on the timing. Furthermore, the 2C2 module is larger and more expensive than single circuit components or two-channel components.

Therefore, there is a demand for a brake system that overcome these disadvantages, i.e. fulfills the regulatory requirements, are easily to implement (e.g., use available components on vehicle) and do not need additional installation space.

At least some of the problems of the conventional device as described before are overcome by a brake system of claim 1, a commercial vehicle according to claim 12, and a method according to claim 13. The dependent claims refer to further advantageous realizations of the subject matter of the independent claims.

The present invention relates to a brake system for commercial vehicles. The commercial vehicle comprising a front axle controlled by a first brake circuit and at least one rear axle controlled by a second brake circuit. The brake system comprises a foot brake module, FBM, and a two-channel electro-pneumatic module, 2C EPM. The FBM comprises a first pneumatic output port for a first brake circuit, a second pneumatic output port for the second brake circuit, a driver interface as first input, and a pneumatic control port as a second input. The FBM is configured to generate a first control pressure for the front axle (e.g. as a first brake circuit) and is further configured to generate a second control pressure for the rear axle (e.g. as second brake circuit). The generated first control pressure and/or the second control pressure is/are controllable by the driver interface and/or by the pneumatic control port. The 2C EPM comprises a first channel port, a second channel port, and a pneumatic input port. The first channel port is configured to provide a first channel output for the at least one rear axle. The second channel port is configured to provide a second channel output to the pneumatic control port of the FBM. The pneumatic input port is configured to receive the second control pressure from the FBM. The pneumatic input port is adapted to fluidly control the first channel port and is fluidly disconnected from the second channel port. In particular, the pneumatic input port is fluidly connectable to the first channel port. Alternatively, or in addition, the pneumatic input port may be configured to provide only a control pressure upon which the first channel port outputs the associated second channel output.

Thus, the brake system according to embodiments has two brake circuits but utilizes only a 2-channel EPM without needing a 2-channel, 2-circuit EPM.

The term "fluidly connectable" shall be construed in that there is a secondary operation mode (backup mode), where the two ports (the pneumatic input port and the first channel port) are fluidly connected, whereas in another operation mode (e.g. a primary operation mode) both ports are fluidly disconnected. As mentioned before, alternatively, the input air at the pneumatic input port serves merely as a control pressure for generating a corresponding output pressure. This switching may be implemented by a valve that opens or closes a respective connection channel. A fluid connection means thus that pressurized air can flow between both ports. However, according to embodiments, the pneumatic input port and the second channel port may be permanently disconnected - this connection is in embodiments not switchable (by a valve or other switches). In other words, there is no channel connecting the pneumatic input port and the second channel port, both ports are non-communicating in all operation modes.

Optionally, the FBM is further configured to generate electrical control signals indicative of an actuation of the driver interface. The 2C EPM may be configured to receive the electrical control signals and, based thereon, to provide the first channel output for the at least one rear axle. For this, the 2C EPM may comprise an integrated electronic controller configured to process the electrical control signals. A conventional 2C EPM may not have the enhanced controlling capabilities but may have only minimal electronics that primarily reads in a pressure request from an ECU received via brake request, e.g. via CAN, provides a desired brake pressure, which wheel speed information may be read from wheel speed sensors.

Optionally, the FBM may couple to an external electronic controller to receive electronic signals indicating a driver brake request. Optionally, according to embodiments, the 2C EPM comprises integrated electronic controller (or is controllable through external electronic controller) to generate the first and second channel outputs.

The external electronic controllers may be a brake controller that control various, or all functions of the electronic brake system as described in this disclosure. Therefore, according to embodiments, the electronic controller of the FBM and/or of the 2C EPM are realized as separate components (i.e. they do not share the housing of the FBM or 2C EPM).

Optionally, the brake system includes a detector to detect an error that prevents the 2C EPM from generating the first channel output (e.g. based on the electrical control signals received from the FBM). The error may relate to a failure or malfunctioning of the 2C EPM and/or of the FBM or of any other brake component and may jeopardize an appropriate braking. Then, upon a detected error (failure or malfunctioning), the 2C EPM is configured to fluidly connect the pneumatic input port to the first channel port to forward the second control pressure as backup to the rear axle. The pneumatic input port of the 2C EPM may be the backup input of the 2C EPM and the pressure for the rear axle may be fed into this port for forwarding to the rear axle(s). However, when the exemplary backup valve is closed (e.g. during flawless electronic control of the 2C EPM), pressurized air received at the pneumatic input port has no effect. According to embodiments this fluid connection is thus opened only upon a detected error, otherwise it is always closed (e.g. to not interfere the normal operation).

Therefore, this backup mode represents a pure pneumatic control. The detector may be included in one of the controllers or electronic control units (e.g. in the 2C EPM, in the FBM, in external brake controller, etc.). The detector may receive sensor signals to enable a detection of a malfunctioning or failure in the brake system (from pressure sensors, acceleration sensor, etc.).

Optionally, the 2C EPM further includes an electronic input port connectable to a vehicle network (e.g. a CAN, controlled area network) for receiving an external brake request. The 2C EPM may be configured to provide the first channel output for the at least one rear axle and/or to provide the second channel output for the pneumatic control port of FBM based on the received external brake request. The FBM may output the first control pressure (for the front axle) based on the external brake request. Likewise, the 2C EPM may provide the first channel output (for the rear axle(s)) based on the external brake request. The external brake request may come from one or more of the following systems: an adaptive cruise control, ACC, another electronic control unit, ECU. The electronic input port can differ from an electric connection for the electronic brake signal received from the FBM. Therefore, the 2C EPM may have at least two inputs for electrical signals. However, both electronic inputs can also be the same.

Optionally, the 2C EPM or its electronic controller implements an electronic stability program, ESP, function and/or an automatic traction control, ATC, function controller of the 2C EPM or in another control unit. For these reasons an IMU (inertial measurement unit) may likewise be included in the 2C EPM.

Optionally, the FBM is configured to detect an actuation of driver interface and, upon an actuation detection, the FBM is configured to generate the first control pressure for the front axle pneumatically only based on the detected actuation of the driver interface. Therefore, the FBM may be able to control circuit-separated pressures for the front axle and rear axle(s) and embodiments may be able to override a possible pneumatic signal generated by 2C EPM with a driver actuation of the driver interface to control pneumatically the front axle. The rear axle(s) may still be electronically controlled.

Optionally, the brake system comprises further one or more pressure control valves, PCV, at the front axle, where each PCV is configured to adjust (e.g. to lower) a pressure at each wheel on the front axle. The brake system may further comprise a brake controller. The brake controller may be configured to implement a recuperation mode and/or a blending mode by
- controlling the PCVs at the front axle to lower the brake pressure and/or
- controlling the 2C EPM by changing the first channel output to lower a brake force at the least on rear axle.

In the recuperation mode, motion energy is recuperated (e.g. in electrical energy) by lowering the braking force exerted by the brake system and instead to slow down the vehicle by the recuperation. The blending mode is a mode of partially braking or gradually varying the braking applied by the brake system. Instead of generating electrical energy, other mechanisms can be used to slow down the vehicle such as a sustained action brake (e.g. a retarder).

The brake controller(s) may be a separate component(s) from the other electronic control units (controller) already mentioned. Alternatively, or additionally, the brake controller can be integrated or implemented in one of the available control units (e.g. in the 2C EPM).

The vehicle may be configured to couple to a trailer.

Then, optionally, the brake system comprises a trailer control module, TCM for supplying a supply pressure and/or a pneumatic control pressure to the trailer. The TCM may comprise or has as integrated part at least one of the following:
- an electronic pressure control based on electronic trailer brake requests (e.g. from the FBM),
- a first input port for the first control pressure (e.g. as backup pneumatic control),
- a second input port for the second control pressure,
- a pressure sensor to measure a pressure value for the pneumatic control pressure to the trailer,
- a parking brake function.

Therefore, the TCM may implement a two-circuit pneumatic control. The TCM may also be controlled by one of the brake controllers as mentioned in this disclosure. In the recuperation mode or blending mode, the brake pressure to the trailer can be lowered or can be zero to recuperate as much energy as possible.

Alternatively, or additionally, the brake system may further comprise at least one of the following:
- a trailer control valve, TCV, with a first input port connected with the first pneumatic output port of the FBM and a second input port connected with the second pneumatic output port of the FBM to implement a two-circuit control by the TCV, wherein the TCV is configured to supply a supply pressure and/or a pneumatic control pressure to the trailer based on a pressure at the first input port and/or at the second input port,
- a trailer pressure control valve can be controlled by the 2C EPM or another brake controller as described in this disclosure to adjust the pneumatic control pressure to the trailer,
- a pressure sensor configured to measure the pneumatic control pressure supplied to the trailer,
- trailer coupling terminals for the supply pressure and for the pneumatic control pressure supplied to the trailer.

Therefore, the first control pressure and the second control pressure provide a redundant pneumatic control based on electronic trailer brake requests (e.g. from the FBM). For example, the first control pressure which is supplied to the front axle may serve as backup control in case a failure or malfunctioning of the primary control is detected. The primary control of the brake pressure for the trailer may be implemented by the second control pressure. The trailer PCV may be used to further adjust the supplied trailer control pressure. It is understood that an adjustment of the pressure by a PCV may be a lowering of the pressure by a controlled exhaustion.

Optionally, the brake system further comprises at least one of the following:
- a first relay valve for the front axle,
- a second relay valve for the at least one rear axle,
- a first air reservoir for pressurized air supply of the front axle and/or to the FBM,
- a second air reservoir for pressurized air supply of the rear axle(s) and/or to the 2C EPM and/or the FBM,
- multiple brake cylinders for multiple vehicle wheels,
- multiple pressure control valves, PCV, at the at least one rear axle, each PCV is configured to adjust a pressure at each wheel,
- a trailer PCV for a control pressure supplied to a trailer,
- a traction control for the rear axle which is controlled by the first channel output.

The PCVs may again be controlled by the 2C EPM or another brake controller as described in this disclosure to adjust the pneumatic control pressure as needed or desired (e.g. also for an ABS function).

Further embodiments relate to a vehicle which can be a commercial vehicle (e.g. a long-haul transport vehicle or a bus) configured to couple to at least one trailer and with a brake system as described in this disclosure.

Further embodiments relate to a method for redundant supply of brake pressure in a brake system of a commercial vehicle. The commercial vehicle comprises a front axle controlled by a first brake circuit and at least one rear axle controlled by a second brake circuit of the FBM. The method includes the steps of:
- generating, by a foot brake module, FBM, a first control pressure for the front axle (e.g. for a first brake circuit) and a second control pressure for the rear axle (e.g. for a second brake circuit), wherein the generated first control pressure and/or the generated second control pressure are controllable by the driver interface and/or by the pneumatic control port;
- providing, by a two-channel electro-pneumatic module, 2C EPM, a first channel output for the rear axle;
- providing, by the 2C EPM, a second channel output for a pneumatic control port of the FBM;
- receiving, by a pneumatic input port of the 2C EPM, the second control pressure from the FBM, wherein pneumatic input port is fluidly connectable to the first channel port and fluidly disconnected from the second channel port.

Optionally, the method further includes:
- receiving an external brake request;
- performing, upon receipt of the external brake request, the steps of providing the first and second channel outputs by the 2C EPM; and
- providing, by the FBM, a first control pressure for the front axle based on the received second channel output of the 2C EPM.

As already mentioned, the FBM may also output the second control pressure at the second pneumatic output port which, however, may have no effect since the pneumatic input port of the 2C EPM (backup port) is blocked, because an exemplary backup valve in the 2C EPM is closed (is open only in the backup situation).

This method may also be implemented in software, or as a computer program product (e.g. as a computer-readable storage device). Therefore, embodiments relate also to a computer program product having a program code for performing the method, when the computer program is executed on a processor or to a machine-readable storage medium characterized by having instructions codes stored therein adapted to perform the steps of the method, wherein said instructions codes are executed on a computer or processor. All functions of the brake system described in this disclosure may be implemented as further, optional method steps and may be implemented by software.

Embodiments overcome the disadvantages of the conventional solutions by using a two-channel EPM, wherein one channel can control (pneumatically) the rear axle, and the other channel can control (pneumatically) the front axle. The circuit separation is achieved by routing the pressure for the front axle through the FBM which has an addition pneumatic control input port for this. This additional pneumatic input control port can be used to activate the FBM - in addition to the driver's mechanical operation of a driver interface (brake pedal) - whereupon it outputs a dual-circuit control pressure: one pressure for the rear axle, which acts as a backup pressure in conventional EBS systems, and one pressure for the front axle, which (via an optional relay valve) brakes the front axle directly.

According to embodiments, the 2C EPM includes an integrated (e.g. in the same housing) control unit (e.g. an electronic controller). By this, no new 2C2 component needs to be implemented. Instead, available components can be used - perhaps with minor modifications. For example, a fluid connection between the pneumatic backup input of the 2C EPM and the one channel output port that is connected to the FBM should be interrupted (e.g., by permanently closing a respective opening/bore hole).

Some examples of embodiments will be described in the following by way of examples only, and with respect to the accompanying figures, in which:
- Fig. 1: depicts a brake system according to an embodiment of the present invention.
- Fig. 2: depicts further details of the brake system designed for a commercial vehicle according to embodiments.
- Fig. 3: shows a schematic flow chart for a method for redundant supply of brake pressure in a 2-circuit brake system according to embodiments.

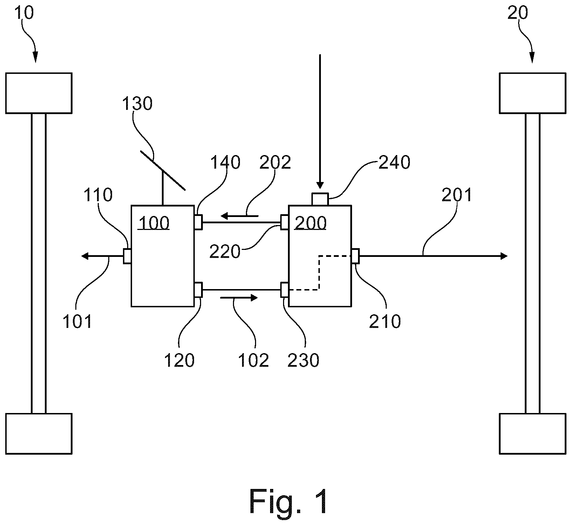

**Fig. 1** depicts a brake system according to an embodiment. The brake system is adapted for a commercial vehicle such as a truck, towing vehicle, bus etc. which may couple to a trailer. The commercial vehicle comprises a front axle 10 which may be controlled by a first brake circuit and at least one rear axle 20 which may be controlled by a second brake circuit. The brake system comprises a foot brake module, FBM, 100 and a two-channel electro-pneumatic module, 2C EPM, 200.

The FBM 100 comprises a first pneumatic output port 110 for a first brake circuit, a second pneumatic output port 120 for a second brake circuit, a driver interface 130 as first input (e.g. a brake pedal), and a pneumatic control port 140 as a second input. The FBM 100 is configured to generate a first control pressure 101 for the front axle 10 at the first pneumatic output port 110 (e.g. for the first brake circuit) and second control pressure 102 for the rear axle(s) 20 at the second pneumatic output port 120 (e.g. for the second brake circuit). The generated first control pressure 101 and the second control pressure 102 are controllable by the driver interface 130 and/or by the pneumatic control port 140.

The 2C EPM 200 comprises a first channel (output) port 210, a second channel (output) port 220, and a pneumatic input port 230 (e.g. a backup input). The first channel port 210 is configured to provide a first channel output 201 for the rear axle(s) 20. The second channel port 220 is configured to provide a second channel output 202 to the pneumatic control port 140 of the FBM 100. The pneumatic input port 230 is fluidly connectable to the first channel port 210. The pneumatic input port 230 is fluidly disconnected from the second channel port 220. A respective opening or bore hole may be permanently closed or is not even formed. Again, the pneumatic input port may likewise be configured to provide only a control pressure upon which the first channel port 210 outputs an associated output pressure. The connecting line in **Fig. 1** is therefore dashed.

The term "connectable" means that there may be switch or valve (e.g. a backup valve), which is able to open and close this connection. It may also open automatically in the backup mode. The FBM 100 can be configured to generate electrical control signals indicative of an actuation of the driver interface 130. Then, the 2C EPM 200 may be configured to receive the electrical control signals on a respective electronic input (not shown in **Fig. 1****)** and based thereon, to provide the first channel output 201 for the rear axle(s) 20.

The 2C EPM 200 may comprise another integrated electronic controller or is controllable through another external electronic controller to generate the first channel output 201 and/or the second channel output 202. These controllers are not explicitly shown in **Fig. 1****.** These electronic controllers (for the FBM 100 and/or for the 2C EPM 200) can also be realized as separate components (i.e. they are not in a housing of the FBM 100 / 2C EPM 200). According to embodiments a (central) brake controller may also take over all or some the control functions.

According to embodiments the brake system may include a detector to detect an error or malfunctioning preventing the 2C EPM 200 from generating the first channel output 201 or causes only insufficient braking effects. This malfunctioning can be a failure in the 2C EPM 200 or in the FBM 100. For example, the FBM 100 may be unable to generate correct electrical control signals. Upon a detected error (and possibly only then and possibly automatically), the 2C EPM 200 may be configured to fluidly connect the pneumatic input port 230 to the first channel port 210 to forward the second control pressure 102 as backup control pressure to the rear axle(s) 20. Thus, the FBM 100 can (purely) pneumatically control not only the brake pressure at the front axle 10 (through the first control pressure 101) but also at the rear axle(s) 20 through the second control pressure 102 forwarded to rear axle(s) 20 by the 2C EPM 200.

According to embodiments, the 2C EPM 200 includes an electronic input port 240 connectable to a vehicle network (e.g. CAN) for receiving external brake requests (e.g. from ACC, or other ECUs). Based on a received external brake request, the 2C EPM 200 may provide the first channel output 201 for the rear axle(s) 20 and/or provide the second channel output 202 for the pneumatic control port 140 of FBM 100. These external brake requests are typically different from the driver requests and happen often when no driver input is detected (e.g. for assist or stability systems). The FBM 100 generates, based on an external request, again the first control pressure 101 (for the first circuit) and the second control pressure 102 (for the second circuit). The electronic control input port 240 may be different from the interface that receives the electronic brake signals from the FBM 100. Thus, there may be two electronic inputs. Optionally, however, there may be only one interface for receiving electronic inputs for internal brake requests (from the FBM 100) or external brake requests.

According to embodiments, when the FBM 100 receives a driver input, the FBM 100 can generate the first control pressure 101 for the front axle 10 pneumatically only based on the received actuation of the driver interface 130. In other words, the FBM 100 may override or add a possible pneumatic signal received from the 2C EPM 200 by the received driver input. The rear axle(s) 20, however, may still be electronically controlled by the 2C EPM 200. The output at the second pneumatic output port 220 is ineffective as long as the pneumatic input port of the 2C EPM is closed.

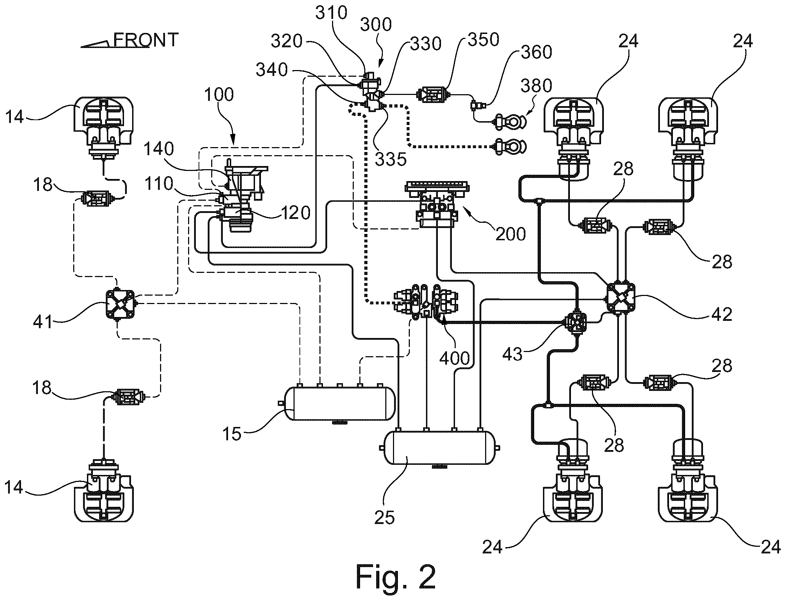

**Fig. 2** depicts further details of embodiments for the brake system of the commercial vehicle. The depicted brake system is designed for an exemplary commercial vehicle having a steered axle 10 (e.g. front axle) and two rear axles 20a, 20b (at least one of them can be driven). It is understood that the number of axles is optional, there may be more or less axles at the front side or at the rear side of the vehicle. At the front axle 10, there are for each wheel a respective brake cylinder 14, a pressure control valve, PCV 18, and one (optional) first relay valve 41. Similarly, at the rear axles 20, there are for each wheel a respective brake cylinder 24, a respective PCV 28, and one (optional) second relay valve 42 (e.g. a two-channel relay valve for both rear axles).

Each brake cylinder 14, 24 enables a friction braking such as based on brake pads acting on braking discs or utilizing other friction-based braking. Some of the brake cylinders 24 may include spring brake chambers (for a parking brake function), which are actuated by a spring force providing a permanent brake force.

Each relay valve 41, 42 has a (pneumatic) control input and an inlet for a supply pressure and is adapted to provide a desired brake pressure with a needed air volume for the brake cylinders 14, 24. The relay valve 41, 42 are designed to provide an amplification for the pressurized air volume fed to the brake cylinders 41, 42 to achieve a sufficient braking effect. However, if sufficient air volume is already available, the relay 41, 42 can be omitted.

The brake system comprises again a FBM 100 and an 2C EPM 200 which are configured as designed as in **Fig. 1** to control the brake pressures for the respective axles. In addition to those components, the embodiment of Fig. 2 includes an electronic parking brake module, PBM 400, for the rear axle(s) 20. Again, to provide sufficient air volume to spring brake chambers (which may be part of the brake cylinders 24) to release the parking brake on both rear axles, a third relay 43 may be formed between the PBM 400 and the respective brake cylinders 24. The PBM 400 may also include two circuits, one for the rear axles 20 and one for a trailer (if coupled to the vehicle). The FBM 100 and/or the PBM 400 can be actuated by a driver. The driver interfaces are not shown in **Fig. 2****.**

It is understood that here and in the following for all connections, lines are formed to connect the respective components. This relates to pneumatic lines as well as to electrical lines, which are not always shown in the drawings.

The depicted brake system further comprises two reservoirs 15, 25 for pressurized air supply. A first reservoir 15 provides pressure supply for the FBM 100 (e.g. for the first brake circuit), for the first relay 41, and for the PBM 400 (e.g. for a first brake circuit). A second reservoir 25 provides the pressure supply for the 2C EPM 200, for the FBM 100 (e.g. for the second brake circuit), for the PBM 400 (e.g. for a second brake circuit), and for the second relay valve 42.

According to embodiments, the brake system includes one or more brake controllers (not shown in **Fig. 2****).** The brake controller(s) can implement one or more of the following functions: a traction control, anti-lock braking, a recuperation mode, a blending mode. The traction control function can be implemented for the driven rear axle. The traction control system may send a request to the 2C EPM 200 for apply a braking force on the driven axle (e.g. through the PCVs 28 and/or first channel output 201). Additionally, or alternatively, the ABS function may utilize the PCVs 28 to lower a braking force individually at each wheel end.

The blending mode may relate to a partial friction braking, i.e. the vehicle speed is partially lowered by brake cylinders (friction brake) and partially by generated electric energy (recuperation) and/or by using sustained-action brake such as a retarder. The recuperation mode may be a mode where no friction braking is active and all motion energy is converted into electrical energy, for example. To activate the recuperation mode or blending mode, the controller(s) can control the 2C EPM 200 to change the first channel output 201 to lower a brake force at the least on rear axle 20. In addition, or alternatively, the controller(s) may control the PCVs 18 at the front axle 10 to lower the brake pressure. The "missing" braking will be achieved by recuperation.

The brake controller(s) may be separate components or can be one of the available control units (e.g. in FBM 100 and/or 2C EPM 200).

According to embodiments the vehicle can be couple to a trailer. Accordingly, the brake system of **Fig. 2** further comprises a trailer control valve, TCV 300, with the following pneumatic ports: a first input port 310, a second input port 320, a parking brake input port 340, a trailer pressure control port 330, and the trailer pressure supply port 335. The first input port 310 is connected to the first pneumatic output port 110 of the FBM 100. The second input port 320 is connected with the second pneumatic output port 120 of the FBM 100. Both input ports 310, 320 implement a two-circuit control. The TCV 300 is configured to supply a supply pressure via the trailer pressure supply port 335 and a pneumatic control pressure via the trailer pressure control port 330 to the trailer based on a pressure at the first input port 310 or at the second input port 320. Therefore, the first input port 310 receives the first control pressure 101 and the second input port 320 receives the second control pressure 102. This provides a redundant pneumatic control based on trailer brake requests received from the FBM 100.

According to embodiments the trailer coupling further comprises a trailer-PCV 350, which may be controlled by the 2C EPM 200 or the brake controller to adjust the pneumatic control pressure at the trailer. According to embodiments the trailer coupling comprises a pressure sensor 360 configured to measure the pneumatic control pressure supplied to the trailer and trailer coupling terminals 380 adapted to couple lines of the trailer to brake system according to embodiments. Embodiments are thus able to implement a closed loop control of the brake pressure supplied to the trailer. Moreover, the trailer-PCV 350 may be utilized in the recuperation mode and/or blending mode to lower the braking force from the trailer and to generated instead electrical energy from the trailer motion energy.

According to further embodiments, the braking control of the trailer can also be implemented utilizing a trailer control module, TCM. The TCM includes again output ports for a supply pressure and for a pneumatic control pressure to the trailer. In addition, the TCM comprises one or more of the following (e.g. as integrated components):
- an electronic pressure control based on electronic trailer brake requests (e.g. from the FBM 100),
- a first input port for the first control pressure and a second input port for the second control pressure to implement a two-circuit control,
- a pressure sensor to measure a pressure value for the pneumatic control pressure to the trailer,
- a parking brake function.

The first input port for the first control pressure and a second input port for the second control pressure may only be active if the TCM exhibits a malfunctioning and is not able to control the pressure electronically.

Therefore, in contrast to the TCV 300, the TCM is itself able to control a pressure value, e.g. via a closed loop control using the pressure sensor and the electronic control unit. The TCM may also be controlled by the one or more brake controller as described before and, again, implements a two-circuit control (e.g. as backup).

According to further embodiments the TCM (or eTPCM; electronic trailer pressure control module) has one or two pressure sensors that are read by the hardwired control unit and has solenoids that are controlled by the hardwired control unit.

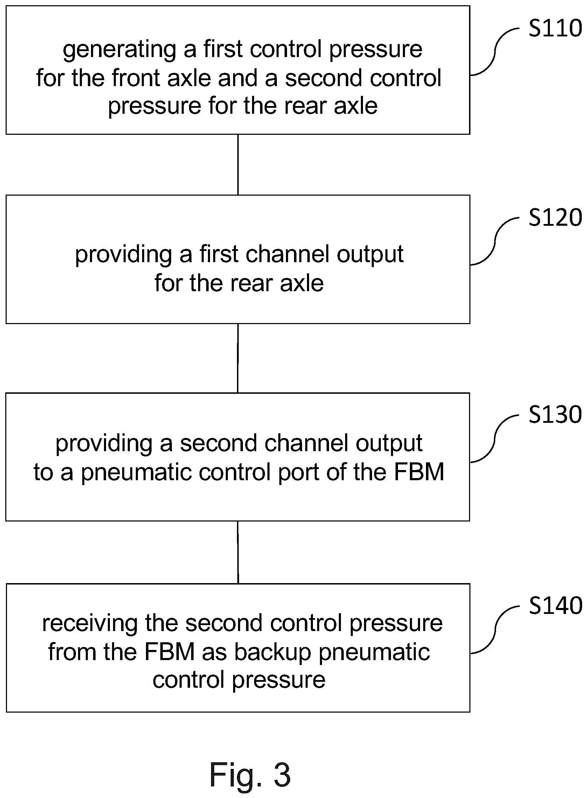

**Fig. 3** depicts a schematic flow diagram of a method for a redundant supply of brake pressures in a brake system for commercial vehicles. The method includes the steps of:
- generating S110, by the FBM 100, a first control pressure 101 for the front axle 10 and a second control pressure 102 for the rear axle(s) 20;
- providing S120, by the 2C EPM 200, a first channel output 201 for the rear axle(s) 20;
- providing S130, by the 2C EPM 200, a second channel output 202 to a pneumatic control port 140 of the FBM 100;
- receiving S140, by a pneumatic input port 230 of the 2C EPM 200, the second control pressure 102 from the FBM 100 as backup pneumatic control pressure (e.g. for the rear axle pressure 201).

The generated first control pressure 101 and/or the generated second control pressure 102 is/are controllable by the driver using the drive interface 130 and/or by the pneumatic control port 140.

This method may also be a computer-implemented method. A person of skill in the art would readily recognize that steps of various above-described methods may be performed by programmed computers. Embodiments are also intended to cover program storage devices, e.g., digital data storage media, which are machine or computer readable and encode machine-executable or computer-executable programs of instructions, wherein the instructions perform some or all of the acts of the above-described methods, when executed on the computer or processor.

Major aspects of embodiments can be summarized as follows:
The braking system as described in this disclosure includes a redundant FBM 100 (rFBM) that detects the driver's intention using a sensor and sends it as an electrical signal to a two-channel 2C EPM 200. The 2C EPM 200 also has an exemplary (CAN) bus input through which braking requests (so-called XBR requests) from other control units can be received (a so-called XBR interface). Further pressure requests can be requested by internal functions of the braking system such as ESP or ATC.

All requests may be processed in the control unit part or in the integrated electronic controller of the 2C EPM 200 and converted into one or more pressure requests (e.g. separated at least according to front axle 10 and rear axle(s) 20). The pressure request(s) is fed into the electro-pneumatic part of the 2C EPM 200 and is available as pressure at the pneumatic outputs (the channel outputs 201, 202). Optionally, up to six pressure control valves 18, 28 for the wheels and, optionally, a trailer PCV 350 are connected to the 2C EPM 200. With their help, individual braking pressures can be applied for the wheels and/or the trailer.

### A. XBR request (external brake requests without driver input)

According to embodiments, in the event of an XBR request without driver input (e.g. from an ACC system), the 2C EPM 200 electronically controls a pressure for the rear axle(s) 20 via a first channel port 201 (depending on the level of the request). This pressure is transmitted via an optional relay valve 42 and optional PCVs 28 to the brake chambers 24 of the rear axle(s) 20. The second channel 202 of the 2C EPM 200 pressurizes the line to the FBM 100 depending on the XBR request. This causes the FBM 100 to control circuit-separated pressures (first and second control pressures 101, 102) for the front axle(s) 10 and the rear axle(s) 20. The pressure for the rear axle(s) 20 is connected to the backup input 230 of the 2C EPM 200. However, this has no effect because the exemplary backup valve in the 2C EPM 200 is closed when the system is electronically controlled (e.g. no backup situation). The pressure for the front axle 10 is routed to the front axle brake cylinders 14 via an optional relay valve 41 and optional PCVs 18.

### B. Driver requests

When the driver applies the brakes, the rear axle 20 may be controlled electronically as with an XBR request. The front axle 10 may be braked purely pneumatically. The 2C EPM 200 does not control any pressure for the front axle 10. This provides the following advantages:
- There would be no possible interference with FBM 100. Since the pressure for the front axle 10 from the FBM 100 generated by the driver's braking action cannot be shut off, an addition application of pressure to the front axle 10 by the 2C EPM 200 is prevented and can thus not interfere with the pressure caused by the driver.
- The driver braking can be built-up and release quickly via the FBM 100 (sufficient pressure gradients). This would be difficult to achieve when the pressure has to propagate from the 2C EPM 200 (which is often installed near the rear axle) along a long pressure line up to the front axle 10.

According to embodiments, requests from an ESP system can be handled in the same way as an XBR request. Furthermore, the PCVs 18, 28 can be activated to control individual wheel pressures.

According to embodiments, the brake system includes a traction control function (ASR or TCS) implemented in one of the available electronic controllers or in a dedicated controller. The traction control may only be activated on driven rear axles and can be controlled or regulated by the 2C EPM 200 in the rear axle channel (the first channel output 201) and the rear axle PCVs 28.

According to embodiments, if the driver brakes in addition to an XBR or ESP request, the above-described control mode for the XBR requests (A) will be maintained. The increase in pressure on the front axle 10 due to the mechanical driver actuation of the FBM 100 and the pressure for front axle 10 from the 2C EPM 200, can be reduced to the desired level again by activating the front axle PCVs 18. Since this operating mode should occur very rarely, the use of the PCVs 18 might be accepted.

According to embodiments, recuperation and blending may be carried out electronically on the rear axle 20. On the front axle 10, the PCVs 18 would have to be used for this purpose since the brake pressure is controlled pneumatically in response to a brake actuation by the driver. Thus, to perform recuperation or blending at the front axle, the brake pressure could be reduced by using the PCVs 18, which would have a negative effect on the lifetime of the PCVs 18, especially in the case of blending. Therefore, it is of advantage to use the rear axle(s) 20 which are controlled electronically by the 2C EPM 200. However, since the front axles 10 only have a small share in the braking performance, this may be acceptable.

As outlined before, in case of a failure at the 2C EPM 200, the backup valve of the 2C EPM 200 opens (i.e. the pneumatic input port 230 will be connected with first channel port 210) and, according to embodiments, the driver can brake (purely) pneumatically in the backup.

According to embodiments, the trailer control can either be performed by a TCM (or eTPCM; electronic trailer pressure control module) which allows an individual pressure control to the trailer or with a TCV 300 (as with ABS systems). However, according to embodiments, the implemented pressure control can be shut off to allow a recuperation, for example. Therefore, when using a TCV 300, at least one trailer PCV 350 (which may also be controlled by the 2C EPM 200) may still be present, to actively control the brake pressure for the trailer. Optionally, a pressure sensor can be installed to control and/or monitor the brake pressure (e.g. read and evaluated by the 2C EPM 200).

According to embodiments, the TCV 300 can be controlled by two circuits. Likewise, when an eTPCM is installed, embodiments allow a two-circuit backup control pressure. Embodiments allow this for both operating modes A) and B), because both outputs of the FBM 100 are connected to the TCV 300 / eTPCM.

According to embodiments, the 2C EPM 200 can also be implemented as individual components, for example by a separate brake control unit and a 2-channel electronic pressure module.

The description and drawings merely illustrate the principles of the disclosure. It will thus be appreciated that those skilled in the art will be able to devise various arrangements that, although not explicitly described or shown herein, embody the principles of the disclosure and are included within its scope.

Moreover, any entity described herein as "device", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective acts of these methods. Further, it is to be understood that the disclosure of multiple acts or functions disclosed in the specification or claims may not be construed as to be within the specific order. Therefore, the disclosure of multiple acts or functions will not limit these to a particular order unless such acts or functions are not interchangeable for technical reasons. Furthermore, in some examples a single act may include or may be broken into multiple sub acts. Such sub acts may be included and part of the disclosure of this single act unless explicitly excluded.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### LIST OF REFERENCE SIGNS

- 10: front axle (braked by first brake circuit)
- 14, 24: brake cylinders
- 15,25: air reservoirs
- 20: rear axle(s) (braked by second brake circuit)
- 18,28,350: pressure control valves (PCV)
- 41,42,43: relay valve
- 100: foot brake module (FBM)
- 101: first control pressure
- 102: second control pressure
- 110: first pneumatic output port of FBM
- 120: second pneumatic output port of FBM
- 130: driver interface of FBM
- 140: pneumatic control port of FBM
- 200: electro-pneumatic module (EPM)
- 201: first channel output
- 202: second channel output
- 210: first channel port
- 220: second channel port
- 230: pneumatic input port
- 300: trailer control module (TCM) or trailer control valve (TCV)
- 310: first input port of TCV
- 320: second input port of TCV
- 340: parking brake input port
- 330: trailer pressure control port
- 335: trailer pressure supply port.
- 360: pressure sensor
- 380: trailer coupling terminals
- 400: electronic parking brake module

## Claims

**1.** A brake system for a commercial vehicle, the commercial vehicle comprising a front axle (10) controlled by a first brake circuit and at least one rear axle (20) controlled by a second brake circuit,
**characterized by:**
a foot brake module, FBM, (100) comprising a first pneumatic output port (110) for a first brake circuit, and a second pneumatic output port (120) for the second brake circuit, a driver interface (130) as a first input, and a pneumatic control port (140) as a second input,
the FBM (100) being configured to generate a first control pressure (101) for the front axle (10) and a second control pressure (102) for the rear axle (20), wherein the generated first control pressure (101) and/or the second control pressure (102) are controllable by the driver interface (130) or by the pneumatic control port (140); and
a two-channel electro-pneumatic module, 2C EPM, (200) with a first channel port (210), a second channel port (220), and a pneumatic input port (230),
the first channel port (210) being configured to provide a first channel output (201) for the rear axle (20),
the second channel port (220) being configured to provide a second channel output (202) to the pneumatic control port (140) of the FBM (100),
the pneumatic input port (230) being configured to receive the second control pressure (102) from the FBM (100) and being adapted to fluidly control the first channel port (210) and being fluidly disconnected from the second channel port (220).

**2.** The brake system according to claim 1, wherein the FBM (100) is further configured to generate electrical control signals indicative of an actuation of the driver interface (130), and wherein the 2C EPM (200) is configured to receive the electrical control signals and, based thereon, to provide the first channel output (201) for the at least one rear axle (20).

**3.** The brake system according to claim 2,
wherein the 2C EPM (200) comprises integrated electronic controller or is controllable through external electronic controller to generate the first and/or second channel outputs (201, 202).

**4.** The brake system according to claim 2 or claim 3, further including a detector to detect an error preventing the 2C EPM (200) from generating the first channel output (201) and, upon a detected error, the 2C EPM (200) is configured to fluidly connect the pneumatic input port (230) to the first channel port (210) to forward the second control pressure (102) as backup to the at least one rear axle (20).

**5.** The brake system according to any one of claims 1 to 4, wherein the 2C EPM (200) further includes an electronic input port (240) connectable to a vehicle network for receiving an external brake request, and wherein the 2C EPM (200) is configured to provide the first channel output (201) for the at least one rear axle (20) and/or to provide the second channel output (202) for the pneumatic control port (140) of FBM (100) based on the received external brake request.

**7.** The brake system according to any one of claims 1 to 6, wherein the 2C EPM (200) further includes an inertial measurement unit, IMU, and is configured to provide an electronic stability program, ESP, function and/or automatic traction control, ATC, function.

**8.** The brake system according to any one of claims 1 to 7, further comprising:
- pressure control valves, PCV (18), at the front axle (10), each PCV (18) is configured to adjust a pressure at each wheel on the front axle (10); and
- a brake controller,
wherein the brake controller is configured to implement a recuperation or blending mode by
- controlling the PCVs (18) at the front axle (10) to lower the brake pressure and/or
- controlling the 2C EPM (200) by changing the first channel output (201) to lower a brake force at the least on rear axle (20).

**9.** The brake system according to any one of claims 1 to 8, wherein the vehicle is configured to couple to a trailer, the brake system further comprising a trailer control module, TCM (300) for supplying a supply pressure and a pneumatic control pressure to the trailer, the TCM (300) comprises at least one of the following:
- an electronic pressure control based on electronic trailer brake requests,
- a first input port for the first control pressure,
- a second input port for the second control pressure to implement a two-circuit control,
- a pressure sensor to measure a pressure value for the pneumatic control pressure to the trailer,
- a parking brake function.

**10.** The brake system according to any one of claims 1 to 8, wherein the vehicle is configured to couple to a trailer, the brake system further comprising at least one of the following:
- a trailer control valve, TCV (300), with a first input port (310) connected with the first pneumatic output port (110) of the FBM (100) and a second input port (320) connected with the second pneumatic output port (120) of the FBM (100) to implement a two-circuit control by the TCV (300),
the TCV (300) being configured to supply a supply pressure and a pneumatic control pressure to the trailer based on a pressure at the first input port (310) or at the second input port (320),
- a trailer pressure control valve (350) configured to be controlled by the 2C EPM (200) or by the brake controller defined in claim 8 to adjust the pneumatic control pressure supplied to the trailer,
- a pressure sensor (360) configured to measure the pneumatic control pressure supplied to the trailer
- trailer coupling terminals (380) for the supply pressure and for the pneumatic control pressure supplied to the trailer.

**11.** The brake system according to any one of claims 1 to 10, further comprising at least one of the following:
- a first relay (41) valve for the front axle (10),
- a second relay valve (42) for the at least one rear axle (20),
- a first air reservoir (15) for pressurized air supply for the first relay (41) of the front axle (10) and/or the FBM (100),
- a second air reservoir (25) for pressurized air supply of the at least one rear axle (20) and/or the 2C EPM (200) and/or the FBM (100),
- multiple brake cylinders (14, 24) for multiple vehicle wheels,
- multiple pressure control valves, PCV (28), at the at least one rear axle (20), each PCV (28) is configured to adjust a pressure at each wheel,
- a trailer pressure control valve (350) for a control pressure supplied to a trailer,
- a traction control for the rear axle which is controlled by the first channel output (201).

**12.** A vehicle, in particular a commercial vehicle configured to couple to at least one trailer, with a brake system according to any one of claims 1 to 11.

**13.** A method for redundant supply of brake pressure in a brake system for commercial vehicles, the commercial vehicle comprising a front axle (10) controlled by a first brake circuit and at least one rear axle (20) controlled by a second brake circuit, **characterized by:**
generating (S110), by a foot brake module (100), FBM, a first control pressure (101) for the front axle (10) and a second control pressure (102) for the rear axle (20), wherein
the generated first control pressure (101) and/or the generated second control pressure (102) are controllable by the driver interface (130) and/or by the pneumatic control port (140);
providing (S120), by a two-channel electro-pneumatic module (200), 2C EPM, a first channel output (201) for the rear axle (20);
providing (S130), by the 2C EPM (200), a second channel output (202) to a pneumatic control port (140) of the FBM (100);
receiving (S140), by a pneumatic input port (230) of the 2C EPM (200), the second control pressure (102) from the FBM (100), wherein pneumatic input port (230) is adapted to fluidly control the first channel port (210) and is fluidly disconnected from the second channel port (220).

**14.** The method of claim 13, further comprising
receiving an external brake request;
performing the steps of providing (S120, S130) upon receipt of the external brake request; and
providing, by the FBM (100), a first control pressure (101) for the front axle (10) based on the received second channel output (202) of the 2C EPM (200).
